Europäisches Patentamt

European Patent Office

Office européen des brevets

(19)

(11) Veröffentlichungsnummer: **0 267 895 B1**

# EUROPÄISCHE PATENTSCHRIFT

(12)

(45) Veröffentlichungstag der Patentschrift: **02.01.92**

(51) Int. Cl.⁵: **B60J 5/04**

(21) Anmeldenummer: **87890239.4**

(22) Anmeldetag: **30.10.87**

(54) **Profilträger, insbesondere Rammschutzträger für Seitentüren und Wände von Kraftfahrzeugkarosserien.**

(30) Priorität: **10.11.86 AT 2983/86**

(43) Veröffentlichungstag der Anmeldung:
**18.05.88 Patentblatt 88/20**

(45) Bekanntmachung des Hinweises auf die
Patenterteilung:
**02.01.92 Patentblatt 92/01**

(84) Benannte Vertragsstaaten:
**BE CH DE FR GB IT LI SE**

(56) Entgegenhaltungen:
**EP-A- 0 235 091**
**AT-A- 375 307**
**DE-A- 2 021 906**
**DE-A- 2 328 829**
**DE-B- 1 959 988**

(73) Patentinhaber: **Austria Metall Aktiengesellschaft**

**A-5282 Braunau am Inn(AT)**

(72) Erfinder: **Laimighofer, Johann**
**Am Stadtbach 32**
**A-5280 Braunau(AT)**
Erfinder: **Garnweidner, Peter**
**Otto v. Lilienthalstrasse 32**
**A-5020 Salzburg(AT)**
Erfinder: **Üblacker, Peter**
**Schilfgasse 4**
**A-5111 Dürmoos(AT)**
Erfinder: **Luttinger, Johann**
**Maislingerstrasse 2**
**A-5231 Schalchen(AT)**

(74) Vertreter: **WILHELMS, KILIAN & PARTNER Patentanwälte**
**Eduard-Schmid-Strasse 2**
**W-8000 München 90(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung bezieht sich auf einen Rammschutzprofilträger für Seitentüren und Wände von Kraftfahrzeugkarosserien.

Es ist bekannt, in Seitentüren von Personenkraftwagen zur Versteifung gegen seitliches Anfahren Träger einzubauen. Diese bestehen aus Rohren, I-Profilen (AT-A-375 307) und sonstigen Versteifungseinlagen und haben die Aufgabe, die aus dünnem Blech bestehenden Seitenwände, insbesondere im Bereich der Stoßstangenhöhe, so zu versteifen, daß die Tür bei einer Seitenkollision nicht so weit eingedrückt werden kann, daß die Insassen zu Schaden kommen. Aus Gewichtseinsparungsgründen werden derartige Träger auch aus Leichtmetall hergestellt. Durch eine ältere, nicht vorveröffentlichte Patentanmeldung (EP-A2-0 235 091) wurde bereits eine Fahrzeugtür mit einem aus einer Leichtmetall-Legierung bestehenden Aufprallprofil vorgeschlagen, das mit beiden Enden in der Fahrzeugtür befestigt und von zwei im Abstand zueinander angeordneten Profilwänden sowie diese verbindenden Querwänden in Form einer Profilkammer gebildet ist. Dabei stehen die Profilwände unter Bildung von Wulstabschnitten über die Außenflächen der Querwände hinaus. Zum Einbau in eine Vordertür eines Personenkraftwagens ist dieses Aufprallprofil an beiden Enden abgeschrägt. Diese Abschrägung bildet mit der Profilunterseite einen spitzen Winkel. Auf diese Weise ist die im Kollisionsfall auf Zug beanspruchte Profilwand an den Enden des Profilträgers entfernt. Ebenso kann ein Teil des unteren Wulstabschnittes herausgetrennt sein, damit im Fall einer Verbiegung des Aufprallprofiles an der Profillängsmitte ein Stauchen der beidseitig anschließenden Wulstabschnitte unterbunden wird.

Der Erfindung liegt die Aufgabe zugrunde, einen Rammschutzprofilträger für Kraftfahrzeugkarosserien zu schaffen, an dem bei Überschreitung der Bruchdehnung ein Sprödbruch vermieden und eine Entlastung der Trägerprofilstege gewährleistet wird.

Diese Aufgabe wird mit einem Rammschutzträger nach Patentanspruch 1 erfindungsgemäß gelöst.

Vorteilhafte Weiterentwicklungen der Erfindung sind in Unteransprüchen beansprucht.

Durch die erfindungsgemäße Ausbildung eines Rammschutzprofilträgers, dessen Druckgurt an seinen Enden wenigstens teilweise entfernt ist und zwischen seinen Enden Ausnehmungen aufweist, wird die Biegeparabel des Trägers auf zwei Stützen mit mittig angreifender Last durch einen sich dadurch ergebenden Poligonzug ersetzt und dadurch ein Sprödbruch bei Überschreitung der Bruchdehnung weitgehend vermieden. Ebenso tragen die Ausfräsungen an den überstehenden Flanschrändern und die Bohrungen im Druckgurt zur Entlastung der Trägerstege und des Profilquerschnittes bei.

Die Erfindung wird nachfolgend anhand eines Ausführungsbeispiels, das auch in der Zeichnung schematisiert dargestellt ist, näher beschrieben. Es zeigen:

Fig. 1    einen Rammschutzprofilträger in Draufsicht,

Fig. 2    eine Seitenansicht dieses Trägers, von der Kraftfahrzeug-Außenseite her gesehen,

Fig. 3    einen Schnitt nach der Linie B-B der Fig. 1 und

Fig. 4    einen Schnitt nach der Linie A-A der Fig. 1.

Wie das dargestellte Ausführungsbeispiel zeigt, ist ein als Vierkantrohr mit verstärkten seitwärts über die Stege 3 hinausstehenden Flanschen 1,2 ausgebildeter Träger zum Einbau in eine Kraftfahrzeugtür vorgesehen. Der verstärkte Flansch 2 bildet mit seiner Außenseite den Druckgurt, während der gegenüberliegende Flansch 1 der Zuggurt ist, wenn der Träger bei einer Kollision in Richtung des Pfeiles 10 belastet wird. Der Träger ist bei den Auflagern 7 und 8 an einem nicht dargestellten Türrahmen angeschraubt. Um eine Entlastung der Stege 3 im Hinblick auf die Beulsteifigkeit zu erreichen, sind im Druckgurt 2 entlang der Längsmittellinie in Abständen Bohrungen 5 angeordnet und die seitwärts überstehenden nach einwärts gebogenen Flanschränder sind mit Ausfräsungen 6 versehen, welche sich im mittleren Bereich des Druckgurtes befinden und alternierend angeordnet sind, d.h. einer Bohrung 5 ist jeweils abwechselnd an einem der Flanschränder eine Ausfräsung 6 zugeordnet. Durch diese Ausfräsungen wird überdies eine Entlastung des gefährdeten Querschnittes erreicht, d.h. die Gefahr des Sprödbruches aufgrund der Überschreitung der Bruchdehnung wird dadurch abgemindert, daß die Biegeparabel der Träger auf zwei Stützen mit mittig nachgreifender Last durch einen sich dadurch ergebenden Poligonzug ersetzt wird.

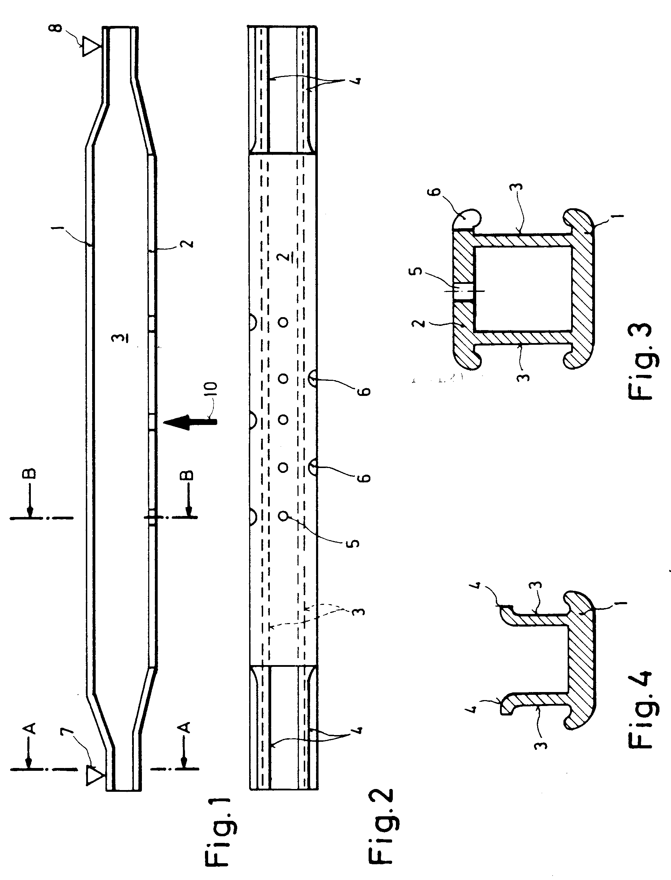

An den Enden im Bereich der Auflager 7,8 ist der Druckgurt 2 (Fig. 2 und 3) durch Zurückschneiden entfernt und die dadurch freien Kanten 4 der Stege 3 sind zur Erhöhung der Steifigkeit in diesem Bereich aufgestaucht und insbesondere nach seitwärts umgebogen.

Die Erfindung ist auf das dargestellte Beispiel nicht beschränkt,

**Patentansprüche**

1.  Rammschutzprofilträger für Seitentüren und Wände von Kraftfahrzeugkarosserien in Form eines Vierkantrohres (1,2,3), dessen Druckgurt (2) zwischen seinen Enden durch Ausnehmungen geschwächt ist, wobei der Druckgurt (2) an seinen Enden wenigstens teilweise entfernt und zwischen seinen Enden mit Bohrungen (5) und Ausfräsungen (6) an seinen Rändern versehen ist.

2. Träger nach Anspruch 1, dadurch gekennzeichnet, daß am Druckgurt (2) die Bohrungen (5) entlang seiner Längsmittellinie und die Ausfräsungen (6) an den seitlichen Rändern alternierend angeordnet sind.

3. Träger nach Anspruch 1 oder 2, dadurch gekennzeichnet, daß der Druckgurt (2) in seinen Endbereichen völlig entfernt ist und die dadurch freien Kanten (4) der Stege (3) aufgestaucht, insbesondere seitwärts umgebogen sind.

**Claims**

1. A ram protection sectional member for side doors and walls of motor vehicle bodies in the form of a rectangular tube (1, 2, 3), the compression chord (2) of which is weakened between its ends by cut-outs, the compression chord (2) being at least partially removed at its ends and provided on its edges between its ends with bores (5) and cut-outs (6).

2. A sectional member according to claim 1, characterised in that on the compression chord (2), the bores (5) are disposed along its longitudinal central line while the cut-outs (6) are disposed alternately on its lateral edges.

3. A sectional member according to claim 1 or 2, characterised in that the end portions of the compression chord (2) are completely removed and in that the consequently free edges (4) of the webs (3) are compressed and are in particular bent over laterally.

**Revendications**

1. Poutre en profilé anti-choc, destinée aux portières et aux parois de carrosseries de véhicules automobiles, cette poutre se présentant sous forme d'un tube quadrangulaire (1, 2, 3) dont la ceinture (2) de compression est affaiblie par des évidements entre ses extrémités, la ceinture (2) de compression étant au moins partiellement enlevée à ses extrémités et étant munie sur ses bords, entre ses extrémités, de trous (5) et d'évidements fraisés (6).

2. Poutre selon la revendication 1, poutre caractérisée en ce que, sur la ceinture (2) de compression, les trous (5) sont disposés le long de sa ligne médiane longitudinale et en ce que les évidements fraisés (6) sont disposés en alternance sur les bords latéraux.

3. Poutre selon la revendication 1 ou 2, caractérisée en ce que la ceinture (2) de compression est complètement enlevée à ses zones d'extrémité, et en ce que les bords (4) des parties de liaison (3), devenus libres de ce fait, sont refoulés et en particulier sont recourbés latéralement.

Fig.1

Fig.2

Fig.3

Fig.4